(19) **Europäisches Patentamt / European Patent Office / Office européen des brevets**

(11) **EP 3 924 869 B1**

(12) **FASCICULE DE BREVET EUROPEEN**

(45) Date de publication et mention de la délivrance du brevet:
**01.02.2023 Bulletin 2023/05**

(21) Numéro de dépôt: **20703038.8**

(22) Date de dépôt: **06.02.2020**

(51) Classification Internationale des Brevets (IPC):
**G06V 40/13** $^{(2022.01)}$

(52) Classification Coopérative des Brevets (CPC):
**G06V 40/1306**

(86) Numéro de dépôt international:
**PCT/EP2020/053019**

(87) Numéro de publication internationale:
**WO 2020/165023 (20.08.2020 Gazette 2020/34)**

(54) **SYSTÈME D'ACQUISITION D'EMPREINTE DIGITALE ÉQUIPÉ D'UN DISPOSITIF AMÉLIORÉ D'ADRESSAGE DE LIGNES**

SYSTEM ZUR ERFASSUNG VON DIGITALEN FINGERABDRÜCKEN, AUSGERÜSTET MIT EINER VERBESSERTEN VORRICHTUNG ZUM ADRESSIEREN VON LINIEN

SYSTEM FOR ACQUIRING DIGITAL FINGERPRINTS EQUIPPED WITH AN IMPROVED DEVICE FOR ADDRESSING LINES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2019 FR 1901324**

(43) Date de publication de la demande:
**22.12.2021 Bulletin 2021/51**

(73) Titulaire: **ISORG**
**87068 Limoges Cedex 3 (FR)**

(72) Inventeur: **BLANCHON, David**
**38040 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
**EP-A1- 0 586 398      FR-A1- 2 975 213**
**US-A1- 2017 336 894**

EP 3 924 869 B1

## Description

L'invention se rapporte à un système d'acquisition d'empreinte digitale équipé d'un dispositif amélioré d'adressage de lignes. Elle trouve son application notamment pour des capteurs d'images, disposés par exemple sous des écrans tactiles, afin d'identifier un utilisateur par une reconnaissance de ses empreintes digitales, à n'importe quel endroit de l'écran.

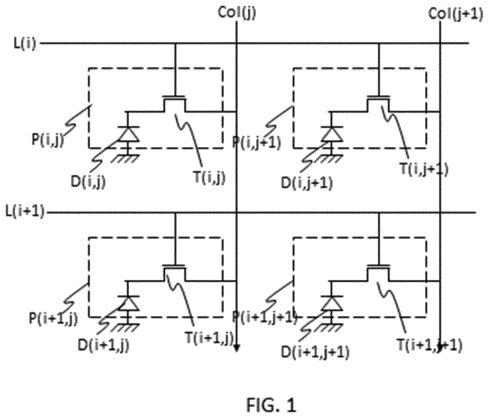

Les matrices de détection utilisées dans les panneaux dits de TFT sont, de façon connue, composées de cellules de détection P(i,j), également appelées pixels, agencées en lignes et en colonnes. La figure 1 illustre un tel agencement. Par convention, on note que la cellule de détection P(i,j) est située sur la ligne L(i) et sur la colonne Col(j). Chaque cellule de détection P(i,j) est composée d'un capteur de lumière D(i,j), généralement une photodiode, qui génère des charges en proportion de l'énergie lumineuse reçue et les stocke dans sa capacité, et d'un transistor en couches minces T(i,j), dont la source est connectée au détecteur de charge D(i,j).

L'adressage séquentiel des lignes L(i) demande de fournir deux tensions distinctes : une tension Voff pour maintenir non passants tous les transistors T(i,j) d'une ligne et une tension Von pour rendre passants tous les transistors T(i,j) d'une ligne. Les transistors T(i,j) sont adressés par un jeton de sélection (ou « token » selon la terminologie anglo-saxonne). Le jeton de sélection est un signal de niveau haut (tension Von) durant un instant prédéterminé, par rapport à un niveau bas (tension Voff inférieure à Von), qui se propage de ligne en ligne, dans un sens donné, par exemple de la ligne L(i) à la ligne L(i+1).

Au moment où le jeton de sélection se propage dans une ligne L(i), le niveau haut du jeton commande l'état passant de tous les transistors de la ligne. Le niveau haut du jeton de sélection est configuré pour avoir une valeur supérieure à la tension de seuil des transistors. Les électrons stockés dans chacun des détecteurs de charge D(i,j) de la ligne sont transmis à un intégrateur de charge via la colonne Col(j) associée au détecteur de charge D(i,j), qui transforme cette valeur en tension. La colonne Col(j) est reliée au drain du transistor T(i,j). L'intégration des charges dans chaque colonne peut être gérée par un circuit intégré commun à tous les colonnes, appelé circuit intégré de lecture (« ReadOut Integrated Circuit » selon la terminologie anglo-saxonne, ou ROIC).Celui-ci convertit en numérique la valeur mesurée, afin que l'image de l'empreinte puisse être générée, ligne par ligne.

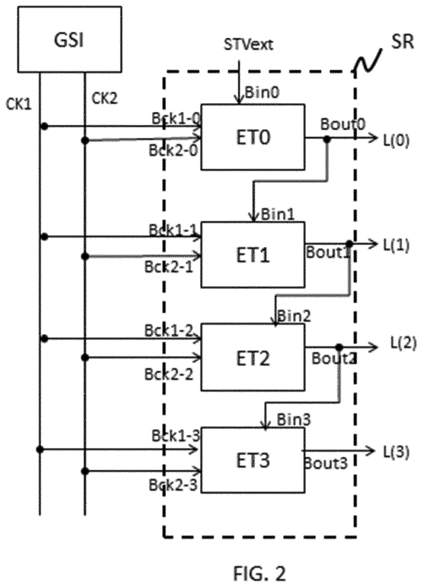

La propagation de ligne en ligne du jeton de sélection est gérée par un dispositif d'adressage de ligne, ou balayeur de lignes, appelé couramment « driver de ligne », ou « gate driver ». Le circuit de commande de ligne est un registre à décalage. Le brevet EP0586398B1 décrit un exemple de registre à décalage utilisé dans des afficheurs à cristaux liquides. Bien que la présente demande soit appliquée aux matrices de détection, et non pas aux matrices d'affichage, le principe est identique. Par référence à la figure 2, chaque étage ET comprend une borne d'entrée Bini (i=0...3) et une borne de sortie Bouti (i=0...3), elle-même connectée à une ligne respective de la matrice. Un générateur de signauxs GSI, qui peut être intégré dans le circuit de lecture « ReadOut Integrated Circuit », génère deux signaux d'horloge CK1, CK2, en opposition de phase l'un par rapport à l'autre. Chaque étage ETi (i=0...3) comprend une première borne d'horloge Bck1-i (i=0...3), apte à recevoir le premier signal d'horloge CK1, et une deuxième borne d'horloge Bck2-i (i=0...3), apte à recevoir le deuxième signal d'horloge CK2. Une impulsion STVext (appelée « jeton ») est reçue par la borne d'entrée Bin0 du premier étage ET0, et au premier coup d'horloge, par exemple du premier signal d'horloge CK1, le jeton est transmis à la ligne L(0) par la borne de sortie Bout0, afin de lire les informations stockées dans les cellules de détection de la ligne correspondante, comme indiqué précédemment.

La borne d'entrée Bin1 du deuxième étage ET1 est reliée à la borne de sortie Bout0 du premier étage ET0. Un deuxième signal d'horloge CK2 est reçu par le deuxième étage ET1 au niveau de la deuxième borne d'horloge Bck2-1. Le jeton est ainsi transmis à la deuxième ligne L(1).. Le premier signal d'horloge CK1 et le deuxième signal d'horloge CK2 sont déphasés l'un par rapport à l'autre, afin qu'il n'y ait aucun temps mort dans la lecture de la matrice.

La propagation du jeton s'effectue ainsi d'étage en étage, jusqu'à ce que toutes les lignes de la matrice aient été lues.

D'autres systèmes d'horloges, différents de deux signaux d'horloge en opposition de phase, peuvent être envisagés, sans sortir du cadre de l'invention. Par exemple, des registres à décalage utilisant plus de deux signaux d'horloge peut être envisagés, voire des registres à décalage utilisant un seul signal d'horloge.

Les dispositifs d'adressage de lignes étaient initialement disposés en dehors de la matrice, reliés à la matrice par exemple par des nappes flexibles. Plus récemment sont apparus des dispositifs d'adressage de lignes implémentés directement dans la matrice, en utilisant des transistors TFT de type unique N ou P. La matrice peut être réalisée par un dépôt de couches sur un substrat, par exemple de type silicium amorphe (a-Si), TFT, silicium polycristallin, semiconducteur organique, oxyde de zinc Gallium Indium amorphe (Ga2O3-In2O3-ZnO).

Ces dispositifs d'adressage intégrés dans la matrice, couramment appelés GOA (Gate Driver On array) permettent de gagner en coût de fabrication, en place occupée, et permet de limiter les erreurs de connexion par rapport aux dispositifs d'adressage externes. Un exemple de GOA est décrit dans la demande de brevet FR2975213.

Toutefois, les GOA utilisés actuellement ont une vitesse très limitée pour passer d'un étage à l'autre, liée aux technologies de TFT. En effet, le passage d'un étage à l'autre dans le registre à décalage demande entre dix et vingt microsecondes, alors que ce délai n'est que cent nanosecondes en technologie CMOS, qui est la technologie généralement utilisée pour les dispositifs d'adressage externes.

Pour une application de reconnaissance d'empreintes sur un écran tactile de téléphone intelligent, ou de tout autre dispositif équivalent, le nombre de lignes de la matrice est environ égal à deux mille, ce chiffre pouvant évidemment varier d'un dispositif à l'autre. Le document US2017/336894A1 divulgue un tel système d'acquisition d'empreinte digitale. Ainsi, si le doigt est posé en bas de l'écran, la propagation du jeton de sélection dans tous les étages du registre à décalage prendrait environ quarante millisecondes. Le temps d'exécution du procédé de reconnaissance d'empreinte peut être par ailleurs multiplié par autant de relectures nécessaires à la consolidation des données, généralement entre trois et six. Le temps nécessaire à la comparaison de l'empreinte avec celle autorisée s'ajoute encore à ces délais.

Le procédé de reconnaissance d'empreinte doit ainsi être exécuté rapidement, en particulier en moins de deux cents millisecondes, délai établi de façon empirique au-delà duquel l'utilisateur détecte un temps de latence, et a donc une sensation d'attente.

L'invention vise donc à fournir un dispositif d'adressage de lignes de type GOA, permettant de commencer le balayage des lignes à l'endroit souhaité de la matrice, en ajoutant le moins possible de nouveaux signaux de commande.

Un objet de l'invention est donc un système d'acquisition d'empreinte digitale, comprenant une surface tactile, configurée pour fournir une information de localisation d'au moins un point de contact d'un doigt présentant une empreinte digitale au contact de la surface tactile, caractérisé en ce que le système comprend :

- un panneau de TFT, disposé sous la surface tactile, comprenant une matrice de détection comprenant M lignes dont au moins certaines comprennent des cellules de détection d'une image représentative de l'empreinte digitale, un système d'adressage de lignes étant intégré dans la matrice, et configuré pour activer, ligne après ligne, les cellules de détection d'une ligne correspondante, suivant un sens de balayage des lignes,
- un dispositif de calcul, configuré pour recevoir l'information de localisation, et pour commander au système d'adressage d'adresser la matrice à partir d'une zone d'adressage regroupant un sous-ensemble de lignes parmi les M lignes de la matrice et comprenant des lignes situées avant et après le point de contact dans le sens de balayage des lignes de la matrice, caractérisé en ce que le système d'adressage comprend un registre à décalage comprenant M étages, chacun des M étages ayant une sortie connectée à une entrée de ligne correspondante, et un registre à décalage additionnel, comprenant N étages, appelés étages additionnels, où N < M, le registre à décalage additionnel étant connecté aux entrées de lignes par l'intermédiaire du registre à décalage, chaque étage additionnel étant relié au premier étage d'un groupe d'étages du registre à décalage.

Avantageusement, le dispositif de calcul est configuré pour déterminer une ligne, appelée ligne initiale, correspondant au début de la zone d'adressage, dans le sens de balayage des lignes, et pour déterminer un étage additionnel, appelé étage additionnel initial, l'étage additionnel initial étant apte à activer les cellules de détection de la ligne initiale.

Avantageusement, le système comprend un générateur de signaux, configuré pour fournir au registre à décalage et au registre à décalage additionnel un premier signal d'horloge et un deuxième signal d'horloge, en opposition de phase l'un par rapport à l'autre.

Avantageusement, chaque étage additionnel comprend :

- une borne d'entrée, configurée pour recevoir signal de niveau haut, appelé jeton,
- un premier transistor dont la grille est reliée, directement ou indirectement, à la borne d'entrée, et dont le drain est configuré pour recevoir un signal d'horloge parmi le premier signal d'horloge ou le deuxième signal d'horloge,
- un noeud intermédiaire relié à la source du premier transistor, le noeud intermédiaire étant relié à la borne d'entrée de l'étage additionnel suivant,
- un circuit d'inhibition de l'étage connecté à l'étage additionnel, commandé par un premier signal d'inhibition fourni par le générateur de signaux, le circuit d'inhibition étant configuré pour que le jeton soit transmis à l'étage additionnel suivant à chaque coup d'horloge tant que le premier signal d'inhibition est à un niveau bas, et que le jeton soit transmis à l'étage connecté à l'étage additionnel lorsque le premier signal d'inhibition est à un niveau haut.

Avantageusement, le générateur de signaux est configuré pour que le premier signal d'inhibition ait un niveau haut lorsque la borne d'entrée de l'étage additionnel initial déterminé par le dispositif de calcul (CALC) reçoit le jeton.

Avantageusement, le circuit d'inhibition comprend :

- un deuxième transistor dont la grille est reliée, directement ou indirectement, au noeud intermédiaire et dont le drain est apte à recevoir le signal d'inhibition,
- une borne de sortie, reliée à la source du deuxième transistor, et à un étage du registre à décalage.

Avantageusement, le générateur de signaux est configuré pour fournir au circuit d'inhibition un deuxième signal d'inhibition, le deuxième signal d'inhibition ayant un niveau haut immédiatement après le passage au niveau bas du premier signal d'inhibition, et dans lequel la borne de sortie est reliée au drain d'un troisième transistor, dont la grille est apte à recevoir le deuxième signal d'inhibition.

Avantageusement, les étages additionnels du registre à décalage additionnel sont connectés aux étages du registre à décalage selon un espacement régulier entre les étages du registre à décalage.

Avantageusement, chaque additionnel est connecté à un étage par l'intermédiaire d'un transistor monté en diode.

Les dessins annexés illustrent l'invention :

[Fig.1] La figure 1, déjà décrite, représente l'agencement en lignes et en colonnes de cellules de détection, selon l'état de la technique.

[Fig.2] La figure 2, déjà décrite, représente de façon schématique un registre à décalage, selon l'état de la technique.

[Fig.3] La figure 3 représente schématiquement le système d'acquisition d'empreinte selon l'invention.

[Fig.4] La figure 4 représente un schéma électrique du registre à décalage additionnel selon l'invention.

[Fig.5] La figure 5 représente un diagramme des temps illustrant le fonctionnement du dispositif d'adressage de lignes selon l'invention.

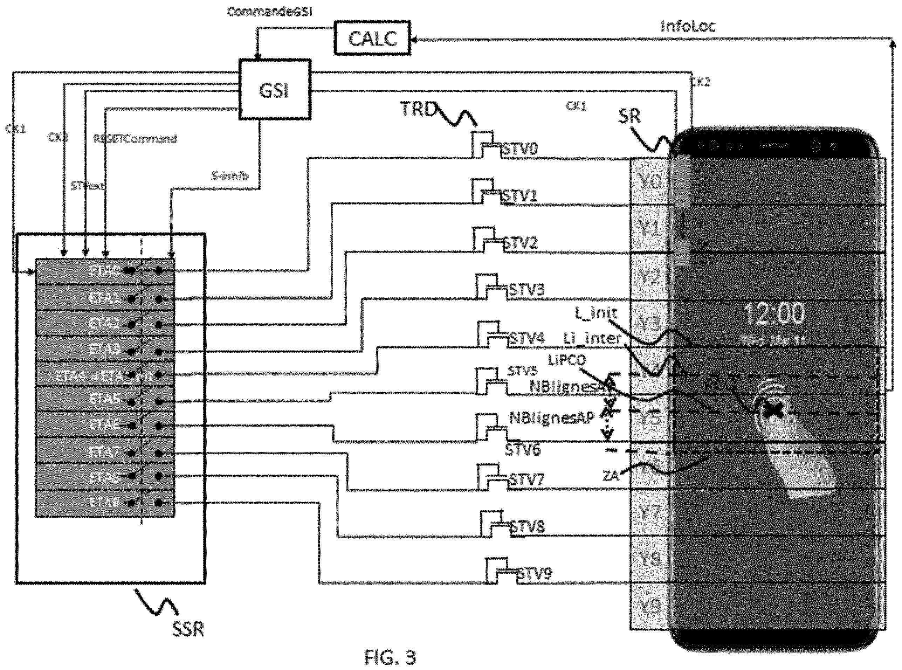

La figure 3 représente de façon schématique le système d'acquisition d'empreinte selon l'invention. La reconnaissance d'empreinte est effectuée sur un appareil, représenté en figure 3 par un téléphone de type « Smartphone », par exemple pour déverrouiller le téléphone, ou encore de sécuriser l'utilisation d'une application telle que le paiement. L'invention ne se limite pas à la reconnaissance d'empreinte sur un téléphone, et peut être mise en oeuvre sur tout type d'appareil électronique.

Le système d'acquisition comprend une surface tactile, non représentée. L'appareil électronique peut également intégrer une fonction d'afficheur combiné à la surface tactile, dont l'ensemble forme alors un écran tactile.

Lors du contact du doigt de l'utilisateur de l'appareil sur la surface, un dispositif de calcul CALC, disposé dans l'appareil électronique, détecte le point de contact PCO du doigt sur la surface tactile. La détection peut se faire de plusieurs manières, par exemple par des technologies résistives ou capacitives. Dans tous les cas, le point de contact PCO correspond à des coordonnées d'un point dans le plan de la surface tactile. En cas de contact étendu, faisant apparaître plusieurs points de contact effectifs, le dispositif de calcul CALC peut considérer que le point de contact à conserver pour la suite du traitement correspond à un des points de contact effectifs (par exemple le point supérieur, ou le point inférieur), ou à un point de contact fictif dont les coordonnées correspondent à la moyenne des coordonnées des points de contact effectifs.

Une matrice de détection, telle que décrite précédemment, est disposée sous la surface tactile, et est intégrée dans un panneau de TFT. La matrice de détection comprend M lignes. Au moins certaines des lignes comprennent des cellules de détection. Toutes les lignes sont pilotées par un dispositif d'adressage intégré dans la matrice. Le dispositif d'adressage comprend un registre à décalage SR comprenant M étages. Chaque étage est connecté à une ligne de la matrice. Un tel étage est par exemple illustré en figure 3 du document FR2975213.

Le système selon l'invention, et illustré en figure 3, permet au registre à décalage SR de transmettre le jeton dans la matrice, avec les signaux d'horloge CK1 et CK2 utilisés habituellement, à partir d'une ligne prédéterminée de la matrice, correspondant à la zone où l'empreinte digitale doit être détectée. Ainsi, en évitant une propagation du signal d'activation dans certains registres à décalage SR, un gain de temps est obtenu.

Pour cela, le système selon l'invention fait appel à un registre à décalage additionnel SSR, également intégré dans la matrice. Le registre à décalage additionnel SSR comprend N étages additionnels ETA, où N<M. Avantageusement, le rapport M/N peut être égal à 20. Ainsi, pour une matrice de deux mille lignes, et donc un registre à décalage de deux mille étages, le registre à décalage additionnel SSR peut comprendre cent étages additionnels. Dans un mode de réalisation particulièrement avantageux de l'invention, le rapport M/N peut être égal à 200. Ainsi, pour une matrice de deux mille lignes, et donc un registre à décalage de deux mille étages, le registre à décalage additionnel SSR peut comprendre dix étages additionnels. La place occupée par le registre à décalage additionnel SSR est donc réduite ; il peut être placé par exemple dans un coin de la matrice. En particulier, il peut être placé à proximité des plots d'entrée/sortie (ou pads selon la terminologie anglo-saxonne).

Avantageusement, les étages additionnels ETA du registre à décalage additionnel SSR sont connectés aux étages ET du registre à décalage SR selon un espacement régulier entre les étages ET du registre à décalage SR. Ainsi, chaque étage additionnels ETA regroupe le même nombre d'étage ET, ce qui facilite l'implémentation du registre à décalage additionnel. Dans l'exemple précité, l'espacement correspond au rapport M/N (200).

En variante, l'espacement entre les étages peut être irrégulier ; par exemple, les étage additionnels ETA peuvent regrouper moins d'étages ET au centre du détecteur, par rapport aux parties supérieure et inférieure.

Le dispositif de calcul CALC peut être un circuit dédié, par exemple un circuit de type ASIC (pour « Application-Specific Integrated Circuit ») ou FPGA (pour « Field-Programmable Gate Array »), ou d'un processeur programmé de manière opportune. Dans ce dernier cas, le dispositif de calcul peut être un processeur central qui remplit également d'autres fonctions. Le dispositif de calcul CALC reçoit une information de localisation InfoLoc issue de la surface tactile, sous forme de coordonnées d'un point dans le plan de la surface tactile. Une zone d'adressage ZA, où doit être analysée l'empreinte digitale de l'utilisateur, est définie par le dispositif de calcul CALC, à partir de l'information de localisation InfoLoc. En effet, les dimensions maximales de la surface occupée par un doigt lors d'une procédure de reconnaissance d'empreinte digitale sont connues dans le domaine des capteurs d'empreintes.

Typiquement, pour un détecteur ayant une résolution de 500 dpi (ou ppp, pour « points par pouce »), sachant qu'une empreinte digitale de pouce peut être mesurée, selon la dimension correspondant à la longueur du doigt, sur environ quinze millimètres, l'acquisition de l'image de l'empreinte sur trois cents lignes est suffisante.

Ainsi, le dispositif de calcul CALC détermine quelle ligne de la matrice correspond au point de contact PCO, et détermine cent cinquante lignes situées avant dans le sens de balayage des lignes de la matrice, et cent cinquante lignes situées après dans le sens de balayage des lignes.

La détermination de la ligne de la matrice correspondant au point de contact PCO de la surface tactile peut faire appel à une procédure dite d'alignement, liée au fait que la résolution de la matrice Res1 (espacement entre deux pixels consécutifs) et la résolution de la surface tactile Res2 (espacement entre deux éléments de détection consécutifs) peuvent être différentes.

Un appui du doigt, dans le plan xy de la surface tactile, se trouve à (x*Res2) sur l'axe des abscisses et (y*Res2) sur l'axes des ordonnées en prenant comme (0,0) un coin de la surface tactile, par exemple le coin haut gauche de la surface tactile.

La correspondance sur la matrice de TFT, par rapport au pixel (0,0) dans le coin (par exemple haut gauche) se trouve à :

$$xTFT = (x*Res2)/Res1 + deltaX/Res1$$

et

$$yTFT = (y*Res2)/Res1 + deltaY/Res1$$

où DeltaX et DeltaY sont les décalages du (0,0) de la matrice TFT par rapport au (0,0) de la surface tactile, mesurés en usine.

La ligne de la matrice LiPCO correspondant au point de contact PCO est donc déduite de la relation entre « yTFT » et « y ».

Bien entendu, le dispositif de calcul CALC peut définir une zone d'adressage avec nombre différent de lignes avant et après le point de contact PCO, par exemple deux cents avant et deux cents après le point de contact PCO.

On définit NBlignesAV le nombre de lignes devant être prises en compte avant le point de contact PCO, et NBlignesAP le nombre de lignes devant être prises en compte après le point de contact PCO, afin de tenir compte des dimensions habituelles d'une empreinte digitale.

Par exemple, NBlignesAV = NBlignesAP = 150

On appelle ligne intermédiaire Li_inter la ligne telle que : #Ligne_inter = #LiPCO - NBlignesAV, où #Ligne_inter désigne le numéro de la ligne intermédiaire, et #LiPCO désigne le numéro de la ligne de la matrice LiPCO correspondant au point de contact PCO.

Par convention, on appelle ligne initiale L_init, la ligne connectée (via l'étage ET du registre à décalage SR) à un étage additionnel ETA, du groupe de lignes comprenant la ligne intermédiaire Li_inter, dans le sens de balayage des lignes de la matrice.

Par convention, on appelle « étage additionnel initial (ETA_init) », l'étage additionnel qui est apte à activer les cellules de détection (P(i,j)) de la ligne initiale (L_init). Chaque étage additionnel ETA est relié au premier d'un groupe d'étages ET du registre à décalage SR. Dans l'exemple précité, chaque étage additionnel ETA regroupe deux cents étages ET, et donc deux cents lignes, et l'étage additionnel initial correspond au cinquième étage additionnel, en considérant que le premier étage additionnel est celui qui reçoit l'impulsion initiale STVext. Sur la figure 3, les blocs Y0-Y9 illustrent le regroupement des différentes lignes.

Le système selon l'invention permet d'adresser un sous-ensemble de lignes parmi les M lignes de la matrice. Le sous-ensemble comprend au moins la zone d'adressage ZA, qui est déterminée en fonction de l'information de localisation InfoLoc.

Le dispositif de calcul CALC commande un générateur de signaux GSI afin que ce dernier génère le nombre de signaux d'horloge demandés. Le dispositif de calcul CALC communique avec le générateur de signaux GSI en transmettant des signaux de commande « CommandeGSI ». Le générateur de signaux GSI peut comprendre un circuit dédié, par exemple un circuit de type FPGA, couplé à un convertisseur de niveau. Le FPGA reçoit les signaux de commande CommandeGSI transmis par le dispositif de calcul CALC. Le FPGA génère les signaux logiques en faible tension (par exemple entre 0 et 3,3 V). Le convertisseur de niveau assure la compatibilité entre les faibles tensions du FPGA, et les tensions plus élevées de la matrice (Von, Voff).

Pour chaque nouvelle lecture de la matrice, le dispositif de calcul CALC commande au générateur de signaux GSI de générer une nouvelle impulsion STVext. Le dispositif de calcul CALC détermine combien de fronts montants du premier signal d'horloge CK1 et du deuxième signal d'horloge CK2 doivent être générés à partir du moment où l'impulsion STVext est générée.

Le dispositif de calcul détermine le nombre de fronts montants en fonction de la position de la première ligne de la zone d'adressage ZA, et plus particulièrement du premier étage ET du groupe d'étages ET dans lequel se trouve la première ligne de la zone d'adressage ZA.

Le générateur de signaux GSI génère un signal S-inhib, appelé premier signal d'inhibition. Le premier signal d'inhibition S-inhib a un niveau haut uniquement lorsque le signal d'horloge auquel est relié l'étage additionnel initial ETAinit, a un niveau haut au moment où le jeton se propage dans l'étage additionnel initial ETAinit. Cette condition est vérifiée par le dispositif de calcul CALC. Le premier signal d'inhibition S-inhib repasse ensuite au niveau bas au lors du front descendant du signal d'horloge.

Dans l'exemple illustré par la figure 3, la zone d'adressage ZA commence à la ligne 800, qui est connectée à un des étages additionnels du registre à décalage additionnel SSR, en l'occurrence le cinquième (ETA4). L'adressage de la matrice est effectué à partir de la ligne 800. Le dispositif de calcul CALC considère donc que le cinquième étage additionnel ETA4 est l'étage additionnel initial ETAinit. A supposer que le premier étage additionnel ETA0 soit activé par le premier coup d'horloge CK1, le deuxième étage additionnel ETA1 sera activé par le deuxième coup d'horloge CK2, et ainsi de suite. Le cinquième étage additionnel ETA4 est activé par le premier coup d'horloge CK1, qui correspond au cinquième front montant CK1/CK2. Le dispositif de calcul CALC délivre alors au registre à décalage additionnel le premier signal d'inhibition S-inhib.

Le générateur de signaux GSI génère ensuite un deuxième signal d'inhibition RESETcommand, qui a un niveau haut immédiatement après le passage au niveau bas du premier signal d'inhibition S-inhib. Le deuxième signal d'inhibition RESETcommand permet d'inhiber la propagation du jeton dans le registre à décalage additionnel. Il se propage ainsi uniquement dans le registre à décalage, à partir de l'étage connecté à l'étage additionnel initial ETAinit.

Chaque étage additionnel reçoit le premier signal d'horloge CK1, le deuxième signal d'horloge CK2, le premier signal d'inhibition S-inhib et le deuxième signal d'inhibition RESETcommand. L'impulsion initiale STVext n'est transmise qu'au premier étage additionnel ETA0.

Avantageusement, chaque additionnel ETA est connecté à un étage ET par l'intermédiaire d'un transistor monté en diode TRD, c'est-à-dire que sa grille est connectée à son drain. Ainsi, lorsque le deuxième signal d'inhibition RESETcommand est appliqué, le transistor monté en diode TRD permet de faire passer le jeton dans le registre à décalage SR tout en isolant l'étage additionnel initial ETA_init qui a transmis le jeton. En effet, le transistor monté en diode TRD ne fait passer que les tensions positives Von ; lorsque l'étage additionnel initial ETA_init est remis à Voff, la ligne du registre à décalage SR qui vient de recevoir le jeton conserve son état à Von.

Dans la figure 3, certains éléments constitutifs de l'invention sont représentés en dehors de l'appareil électronique sur lequel l'empreinte doit être reconnue. Cette représentation est schématique ; en particulier, le registre à décalage additionnel SSR est intégré dans le GOA ; le dispositif de calcul CALC et le générateur de signaux GSI peuvent être disposés dans des circuits connectés au GOA.

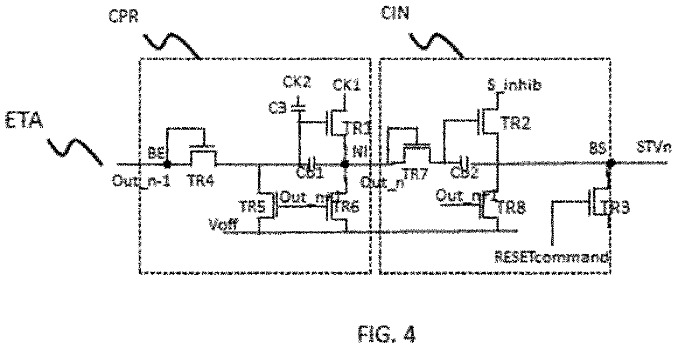

Le schéma électrique de chaque étage additionnel ETA du registre à décalage additionnel est représenté à la figure 4.

L'étage additionnel est décomposé en un circuit de propagation CPR, et un circuit d'inhibition CIN. Le circuit de propagation CPR possède une structure similaire à l'étage illustré en figure 3 du document FR2975213, et fonctionne de façon similaire.

Le signal de sortie Out_n représente la sortie du circuit de propagation CPR de l'étage additionnel ETA de niveau n. Le circuit de propagation CPR reçoit en entrée un signal d'entrée Out_n-1, et fournit un signal de sortie Out_n.

Dans le domaine des dispositifs d'adressage de ligne, l'impulsion du signal d'entrée est couramment appelée jeton ou « token », et est reçu au niveau d'une borne d'entrée BE. Dans le système selon l'invention, le jeton se propage d'étage additionnel en étage additionnel, jusqu'à l'étage additionnel initial ETA_init, où le jeton pourra ensuite se propager dans la matrice, à partir du registre connecté à l'étage additionnel initial ETA_init. Le jeton est transmis par le signal de sortie de l'étage additionnel précédent. Pour le premier étage additionnel, le jeton peut être généré par le générateur de signaux GSI (signal STVext).

Un premier transistor TR1 transmet une impulsion du signal d'horloge CK1 (ou CK2 pour les étages additionnels impairs), lorsqu'il est passant. Son drain est ainsi relié au générateur de signaux GSI. Un condensateur d'élévation Cb1 est connecté entre la grille et la source du premier transistor TR1. Un tel condensateur est responsable de l'effet « bootstrap », qui permet de faire passer la tension drain/source à 2xVon, lorsque le premier transistor TR1 passe de faiblement passant à totalement passant.

Un transistor de précharge TR4 permet de précharger la grille du premier transistor TR1. La source du transistor de précharge TR4 est ainsi reliée à la grille du premier transistor TR1. Un transistor de commande TR5 permet de décharger la grille du premier transistor TR1. Le drain du transistor de commande TR5 est ainsi reliée à la grille du premier transistor TR1. Le transistor de commande TR5 est commandé par le signal de sortie Out_n+1 de l'étage additionnel suivant, de niveau n+1. La grille du transistor de commande TR5 est ainsi reliée au signal de sortie Out_n+1 de l'étage additionnel suivant, de niveau n+1. La grille du transistor de commande TR5 du dernier étage additionnel peut être commandée par un signal spécifique. En particulier, le signal spécifique peut être le deuxième signal d'inhibition RESETcommand. La source du transistor de commande TR5 est polarisée à la tension Voff.

Un transistor de décharge TR6 peut être connecté à la sortie Out_n de l'étage additionnel de niveau n. Il permet de faciliter la décharge de la sortie Out_n lorsque le jeton a été transmis à la ligne. La grille du transistor de décharge TR6 est reliée à la grille du transistor de commande TR5. La présence du transistor de décharge TR6 n'est toutefois pas indispensable, en raison du nombre relativement faible d'étages additionnels (de l'ordre de la dizaine). En effet, le transistor de décharge TR6 effectue une remise à zéro de la tension au niveau de la source du premier transistor TR1, pour empêcher l'apparition de jetons indésirables. Toutefois, avec un nombre très faibles d'étages additionnels, l'apparition de jetons indésirables est peu probable.

Un condensateur de compensation C3 peut être disposé entre le deuxième signal d'horloge CK2 et la source du transistor de précharge TR4. Il permet de compenser les effets de la capacité parasite entre la grille et le drain du premier transistor TR1 pendant les commutations du signal de la première horloge CK1 appliqué au drain du premier transistor TR1. Sa présence n'est toutefois pas indispensable, en raison du nombre relativement faible d'étages additionnels (de l'ordre de la dizaine), le cumul des perturbations parasites est ainsi beaucoup moins gênant que dans les étages classiques des registres à décalage. En effet, dans un registre à décalage comprenant de l'ordre du millier d'étages, sans le condensateur de compensation, la perturbation parasite serait multipliée, en fin de matrice par autant d'étages, ce qui ne serait pas acceptable.

Un noeud intermédiaire NI est disposé en sortie du circuit de propagation CPR. Le signal de sortie Out_n peut être prélevé au niveau du noeud intermédiaire NI. Le noeud intermédiaire NI est relié à la borne d'entrée de l'étage additionnel suivant.

Un circuit CIN d'inhibition de l'étage ET connecté à l'étage additionnel ETA permet à l'étage additionnel soit d'inhiber l'étage ET connecté à l'étage additionnel ETA, et de transmettre ainsi le jeton soit à l'étage additionnel suivant, soit de transmettre le jeton à la matrice afin que les cellules soient adressées. Le circuit d'inhibition CIN reçoit pour cela le signal de sortie Out_,n, et un premier signal d'inhibition S-inhib fourni par le dispositif de calcul CALC. Le dispositif de calcul CALC transmet l'impulsion du signal d'inhibition S-inhib lorsque le jeton se trouve dans l'étage additionnel initial ETA_init. Le dispositif de calcul CALC commande la génération des signaux d'horloge CK1 et CK2, comme illustré par la figure 3. Il peut donc déterminer à quel moment un front montant doit être généré dans le signal d'inhibition S-inhib.

Le circuit d'inhibition CIN comprend un deuxième transistor TR2 dont la grille est reliée au noeud intermédiaire NI et dont le drain est apte à recevoir le signal d'inhibition S-inhib. Avantageusement, un transistor de précharge TR7, monté en diode, est disposé entre le noeud intermédiaire et la grille du deuxième transistor TR2. Le transistor de précharge TR7 permet de précharger la grille du deuxième transistor TR2.

Une borne de sortie BS est reliée à la source du deuxième transistor TR2, et à l'étage ET correspondant du registre à décalage SR. Lorsque le jeton, transmis par le noeud intermédiaire NI, est transmis à la borne de sortie, un front montant d'un signal de validation STVn est généré au niveau de la borne de sortie BS.

Avantageusement, un deuxième condensateur d'élévation Cb2 est connecté entre la grille et la source du deuxième transistor TR2. Un tel condensateur est responsable de l'effet « bootstrap », qui permet de faire passer la tension drain/source à 2xVon, lorsque le deuxième transistor TR1 passe de faiblement passant à totalement passant.

Un deuxième transistor de décharge TR8 peut être connecté à la borne de sortie BS de l'étage additionnel de niveau n. Il permet de faciliter la décharge du deuxième transistor TR2. Il est commandé par le signal de sortie de l'étage additionnel suivant Out_n+1. La grille du transistor de décharge TR8 du dernier étage additionnel peut être commandée par le deuxième signal d'inhibition RESETcommand.

Par ailleurs, le circuit d'inhibition CIN comprend un troisième transistor TR3. Le troisième transistor TR3 est commandé par le deuxième signal d'inhibition RESETcommand, fourni par le générateur de signal GSI. Le deuxième signal d'inhibition RESETcommand a un niveau haut immédiatement après le passage au niveau bas du premier signal d'inhibition S-inhib. La borne de sortie BS est reliée au drain du troisième transistor TR3. Ainsi, le deuxième signal d'inhibition RESETcommand maintient les signaux de validation STVn à Voff une fois que le signal de validation de l'étage additionnel initial ETA_init a été transmis à l'étage du regsitre à décalage SR auquel l'étage additionnel initial ETA_init est connecté, et ceci tout le temps de lecture de la matrice.

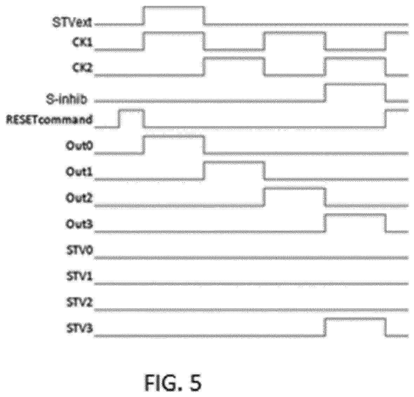

La figure 5 représente un diagramme des temps illustrant le fonctionnement du dispositif d'adressage de lignes selon l'invention. Dans le diagramme illustré par la figure 5, il peut être considéré que le dispositif de calcul CALC a détecté, par les informations de localisation InfoLoc transmises par la surface tactile, que le quatrième registre additionnel peut envoyer le signal d'activation STV3. Cela peut correspondre par exemple à une zone d'adressage commençant entre les lignes 600 et 800, pour une matrice à deux mille lignes, avec vingt étages du registre à décalage SR rattachés à chaque étage additionnel du registre à décalage additionnel SSR.

Une impulsion STVext est fournie à la borne d'entrée BE du premier étage additionnel ETA0. Au même moment, le premier signal d'horloge CK1 a un niveau haut (tension à Von) ; ainsi, le signal de sortie Out0 a un niveau haut. Comme le premier signal d'inhibition S-inhib est au niveau bas (tension à Voff), le jeton est transmis au deuxième étage additionnel ETA1. Le deuxième signal d'horloge CK2 a un niveau haut, ainsi, le signal de sortie Out1 a un niveau haut. Comme le premier signal d'inhibition S-inhib est toujours au niveau bas, le jeton est transmis au troisième étage additionnel ETA2. Le premier signal d'horloge CK1 a un niveau haut, ainsi, le signal de sortie Out2 a un niveau haut. Comme le premier signal d'inhibition S-inhib est toujours au niveau bas, le jeton est transmis au quatrième étage additionnel ETA3.

Le dispositif de calcul a identifié le quatrième étage additionnel ETA3 comme étant l'étage additionnel initial ETA_init. Ainsi, le premier signal d'inhibition S-inhib a un niveau haut au moment où le jeton se propage dans le quatrième étage additionnel ETA3. La sortie Out3 a un niveau haut, et comme le premier signal d'inhibition S-inhib a également un niveau haut, le signal d'activation STV3 passe à Von. Dès lors, le jeton peut être transmis à l'étage ET du registre à décalage SR connecté au quatrième étage additionnel ETA3. La matrice peut être adressée à partir de la ligne associée à cet étage. Ainsi, dans cet exemple, en quatre coups d'horloge, la matrice est adressée à partir de la ligne 600. Les signaux d'horloges sont par ailleurs ceux utilisés pour le registre à décalage, il n'y a donc pas de place à prévoir pour des générateurs d'horloges supplémentaires.

Dès que le premier signal d'inhibition S-inhib est repassé au niveau bas, le dispositif de calcul CALC met à la tension Von le deuxième signal d'inhibition RESETcommand. Ainsi, le troisième transistor TR3 devient passant, et les étages additionnels suivants sont inhibés, jusqu'à la prochaine lecture de la matrice.

Dans un mode de réalisation, l'adressage de la matrice peut être réalisé jusqu'à la dernière ligne de la matrice. Le dispositif de calcul CALC dispose de l'information relative au nombre de lignes total de la matrice ; ainsi, lorsque la dernière ligne de la matrice est atteinte, le dispositif de calcul CALC commande au générateur de signaux GSI d'arrêter de transmettre des signaux d'horloges au registre à décalages SR.

En alternative, le dispositif de calcul CALC, à partir de l'information de localisation InfoLoc, peut commander un arrêt de la lecture de la matrice. En effet, à partir de l'information de localisation InfoLoc, le dispositif de calcul CALC est en mesure de déterminer la dernière ligne de la zone d'adressage ZA. Le dispositif de calcul CALC commande au générateur de signaux GSI d'arrêter d'envoyer des signaux d'horloges au registre à décalages SR lorsque la dernière ligne de la zone d'adressage ZA est atteinte.

Pour revenir à l'exemple illustré par la figure 3, si par exemple, la ligne de la fin de la zone d'adressage ZA correspond à la ligne n° 1240, le dispositif de calcul CALC commande au générateur de signaux GSI de générer cinq coups d'horloges pour que le jeton se propage dans le registre à décalage additionnel SSR, puis quatre cents coups d'horloge pour que le jeton se propage dans les groupes Y4 et Y5, et enfin quarante coups d'horloge pour que le jeton se propage des lignes n° 1200 à 1240. Ainsi, le dispositif de calcul CALC commande au générateur de signaux GSI d'arrêter des générer des signaux d'horloge après 445 coups d'horloges, zone d'adressage ZA.

Le système selon l'invention est particulièrement bien adapté aux détecteurs ayant des matrices de grande taille, comprenant plusieurs milliers de lignes.

Le système selon l'invention permet d'avoir une fonction de fenêtrage (ou windowing), qui est une fonction propre aux détecteurs. Cette fonction n'est en effet pas requise dans les afficheurs de panneaux TFT.

Cette fonction est ajoutée pour un coût quasiment nul, à savoir en rajoutant seulement deux commandes, et un petit registre à décalage additionnel, adaptable en fonction de l'application visée, sur des gate driver intégrés dans un panneau de TFT. Avec un registre à décalage additionnel ne comprenant que dix étages additionnels, un gain de temps significatif d'adressage de la matrice peut être obtenu.

Par ailleurs, de par la taille réduite du registre à décalage additionnel, la surface de la matrice peu, voire n'augmente pas du tout, si le registre à décalage additionnel peut être intégré dans un endroit laissé libre de la matrice. Or, en salle blanche, dans laquelle la matrice est fabriquée, la quantité de défaut est proportionnelle à la taille de la matrice car le nombre de particules de poussière pouvant générer un défaut est proportionnel à la taille de la matrice. Le rendement de la matrice diminue avec l'augmentation de la taille de la matrice. Ainsi, le système selon l'invention affecte peu, voire pas du tout, le rendement de la matrice.

**Revendications**

1. Système d'acquisition d'empreinte digitale, comprenant une surface tactile, configurée pour fournir une information de localisation (InfoLoc) d'au moins un point de contact (PCO) d'un doigt présentant une empreinte digitale au contact de la surface tactile, le système comprenant :

    - un panneau de TFT, disposé sous la surface tactile, comprenant une matrice de détection comprenant M lignes dont au moins certaines comprennent des cellules de détection (P(i,j)) d'une image représentative de l'empreinte digitale, un système d'adressage de lignes étant intégré dans la matrice, et configuré pour activer, ligne après ligne, les cellules de détection (P(i,j)) d'une ligne correspondante, suivant un sens de balayage des lignes,
    - un dispositif de calcul (CALC), configuré pour recevoir l'information de localisation (InfoLoc), et pour commander au système d'adressage d'adresser la matrice à partir d'une zone d'adressage (ZA) regroupant un sous-ensemble de lignes parmi les M lignes de la matrice et comprenant des lignes situées avant et après le point de contact (PCO) dans le sens de balayage des lignes de la matrice,

**caractérisé en ce que** le système d'adressage comprend un registre à décalage (SR) comprenant M étages (ET), chacun des M étages (ET) ayant une sortie connectée à une entrée de ligne correspondante, et un registre à décalage additionnel (SSR), comprenant N étages, appelés étages additionnels (ETA), où N < M, le registre à décalage additionnel (SSR) étant connecté aux entrées de lignes par l'intermédiaire du registre à décalage (SR), chaque étage additionnel (ETA) étant relié au premier étage (ET) d'un groupe d'étages (ET) du registre à décalage (SR).

2. Système selon la revendication 1, dans lequel le dispositif de calcul (CALC) est configuré pour déterminer une ligne, appelée ligne initiale (L_init), correspondant au début de la zone d'adressage (ZA), dans le sens de balayage des lignes, et pour déterminer un étage additionnel, appelé étage additionnel initial (ETA_init), l'étage additionnel initial (ETA_init) étant apte à activer les cellules de détection (P(i,j)) de la ligne initiale (L_init).

3. Système selon la revendication 2, comprenant un générateur de signaux (GSI), configuré pour fournir au registre à décalage (SR) et au registre à décalage additionnel (SSR) un premier signal d'horloge (CK1) et un deuxième signal d'horloge (CK2), en opposition de phase l'un par rapport à l'autre.

4. Système selon la revendication 3, dans lequel chaque étage additionnel (ETA) comprend :

   - une borne d'entrée (BE), configurée pour recevoir un signal de niveau haut, appelé jeton,
   - un premier transistor (TR1) dont la grille est reliée, directement ou indirectement, à la borne d'entrée (BE), et dont le drain est configuré pour recevoir un signal d'horloge parmi le premier signal d'horloge (CK1) ou le deuxième signal d'horloge (CK2),
   - un noeud intermédiaire (NI) relié à la source du premier transistor (TR1), le noeud intermédiaire (NI) étant relié à la borne d'entrée de l'étage additionnel suivant,
   - un circuit d'inhibition (CIN) de l'étage (ET) connecté à l'étage additionnel (ETA), commandé par un premier signal d'inhibition (S-inhib) fourni par le générateur de signaux (GSI), le circuit d'inhibition (CIN) étant configuré pour que le jeton soit transmis à l'étage additionnel suivant à chaque coup d'horloge (CK1, CK2) tant que le premier signal d'inhibition (S-inhib) est à un niveau bas, et que le jeton soit transmis à l'étage (ET) connecté à l'étage additionnel (ETA) lorsque le premier signal d'inhibition est à un niveau haut.

5. Système selon la revendication 4, dans lequel le générateur de signaux (GSI) est configuré pour que le premier signal d'inhibition (S-inhib) ait un niveau haut lorsque la borne d'entrée (BE) de l'étage additionnel initial (ETA_init) déterminé par le dispositif de calcul (CALC) reçoit le jeton.

6. Système selon l'une des revendications 4 ou 5, dans lequel le circuit d'inhibition (CIN) comprend :

   - un deuxième transistor (TR2) dont la grille est reliée, directement ou indirectement, au noeud intermédiaire (NI) et dont le drain est apte à recevoir le signal d'inhibition (S-inhib),
   - une borne de sortie (BS), reliée à la source du deuxième transistor (TR2), et à un étage (ET) du registre à décalage (SR).

7. Système selon la revendication 6, dans lequel le générateur de signaux (GSI) est configuré pour fournir au circuit d'inhibition (CIN) un deuxième signal d'inhibition (RESETcommand), le deuxième signal d'inhibition (RESETcommand) ayant un niveau haut immédiatement après le passage au niveau bas du premier signal d'inhibition (S-inhib), et dans lequel la borne de sortie (BS) est reliée au drain d'un troisième transistor (TR3), dont la grille est apte à recevoir le deuxième signal d'inhibition (RESETcommand).

8. Système selon l'une des revendications précédentes, dans lequel les étages additionnels (ETA) du registre à décalage additionnel (SSR) sont connectés aux étages (ET) du registre à décalage (SR) selon un espacement régulier entre les étages (ET) du registre à décalage (SR).

9. Système selon l'une des revendications précédentes, dans lequel chaque additionnel (ETA) est connecté à un étage (ET) par l'intermédiaire d'un transistor monté en diode (TRD).

**Patentansprüche**

1. Fingerabdruckerfassungssystem, das eine Berührungsoberfläche aufweist, die konfiguriert ist zum Vorsehen von Ortsinformation (InfoLoc) für mindestens einen Kontaktpunkt (PCO) eines Fingers mit einem Fingerabdruck in Kontakt mit der Berührungsoberfläche, wobei das System Folgendes aufweist:

   - ein TFT-Panel, das unter der Berührungsoberfläche angeordnet ist und eine Detektionsanordnung mit M Zeilen aufweist, von denen zumindest einige Detektionszellen (P(i,j)) zum Detektieren eines für den Fingerabdruck repräsentativen Bildes aufweisen, wobei ein Zeilenadressierungssystem in die Anordnung integriert ist und so konfiguriert ist, dass es Zeile für Zeile die Detektionszellen (P(i,j)) einer entsprechenden Zeile in einer Abtastrichtung der Zeilen aktiviert,
- eine Berechnungsvorrichtung (CALC), die konfiguriert ist zum Empfangen der Ortsinformationen (InfoLoc) und zum Anweisen des Adressierungssystems die Anordnung zu adressieren, und zwar ausgehend von einem Adressbereich (ZA), der eine Untergruppe von Zeilen unter den M Zeilen der Anordnung zusammenfasst und die in der Abtastrichtung der Zeilen der Anordnung vor und hinter dem Kontaktpunkt (PCO) angeordnete Zeilen einschließt,

**dadurch gekennzeichnet, dass** das Adressierungssystem ein Schieberegister (SR) mit M Stufen (ET) aufweist, wobei jede der M Stufen (ET) einen mit einem entsprechenden Zeileneingang verbundenen Ausgang aufweist, sowie ein zusätzliches Schieberegister (SSR) mit N Stufen, die als zusätzliche Stufen (ETA) bezeichnet werden, wobei N < M ist, wobei das zusätzliche Schieberegister (SSR) über das Schieberegister (SR) mit den Zeileneingängen verbunden ist, wobei jede zusätzliche Stufe (ETA) mit der ersten Stufe (ET) einer Gruppe von Stufen (ET) des Schieberegisters (SR) verbunden ist.

2. System nach Anspruch 1, wobei die Berechnungsvorrichtung (CALC) konfiguriert ist zum Bestimmen einer Zeile, genannt Anfangszeile (L_init), die in der Abtastrichtung der Zeilen dem Anfang des Adressbereichs (ZA) entspricht, und zum Bestimmen einer zusätzlichen Stufe, genannt Anfangszusatzstufe (ETA_init), wobei die Anfangszusatzstufe (ETA_init) geeignet ist die Detektionszellen (P(i,j)) der Anfangszeile (L_init) zu aktivieren.

3. System nach Anspruch 2, mit einem Signalgenerator (GSI), der konfiguriert ist zum Versehen des Schieberegisters (SR) und des zusätzlichen Schieberegister (SSR) mit einem ersten Taktsignal (CK1) und einem zweiten Taktsignal (CK2) in entgegengesetzten Phasen zueinander.

4. System nach Anspruch 3, wobei jede zusätzliche Stufe (ETA) Folgendes aufweist:

   - einen Eingangsanschluss (BE), der konfiguriert ist zum Empfangen eines Hochpegelsignals, Token genannt,
   - einen ersten Transistor (TR1), dessen Gate direkt oder indirekt mit dem Eingangsanschluss (BE) verbunden ist, und dessen Drain konfiguriert ist zum empfangen eines Taktsignals aus dem ersten Taktsignal (CK1) oder dem zweiten Taktsignal (CK2),
   - einen Zwischenknoten (NI), der mit der Source des ersten Transistors (TR1) verbunden ist, wobei der Zwischenknoten (NI) mit dem Eingangsanschluss der nachfolgenden Zusatzstufe verbunden ist,
   - eine Sperrschaltung (CIN) für die mit der Zusatzstufe (ETA) verbundene Stufe (ET), die von einem ersten, vom Signalgenerator (GSI) gelieferten Sperrsignal (S-inhib) gesteuert wird, wobei die Sperrschaltung (CIN) so konfiguriert ist, dass das Token bei jedem Taktimpuls (CK1, CK2) an die nachfolgende Zusatzstufe übertragen wird, solange das erste Sperrsignal (S-inhib) auf einem niedrigen Pegel liegt, und dass das Token an die mit der Zusatzstufe (ETA) verbundene Stufe (ET) übertragen wird, wenn das erste Sperrsignal auf einem hohen Pegel liegt.

5. System nach Anspruch 4, wobei der Signalgenerator (GSI) so konfiguriert ist, dass das erste Sperrsignal (S-inhib) einen hohen Pegel hat, wenn der Eingangsanschluss (BE) der anfänglichen Zusatzstufe (ETA_init), die von der Recheneinrichtung (CALC) bestimmt wird, das Token empfängt.

6. System nach Anspruch 4 oder 5, wobei die Sperrschaltung (CIN) Folgendes aufweist:

   - einen zweiten Transistor (TR2), dessen Gate direkt oder indirekt mit dem Zwischenknoten (NI) verbunden ist und dessen Drain in der Lage ist, das Sperrsignal (S-inhib) zu empfangen,
   - einen Ausgangsanschluss (BS), der mit der Source des zweiten Transistors (TR2) und mit einer Stufe (ET) des Schieberegisters (SR) verbunden ist.

7. System nach Anspruch 6, wobei der Signalgenerator (GSI) konfiguriert zum Versorgen der Sperrschaltung (CIN) mit einem zweiten Sperrsignal (RESETcommand), wobei das zweite Sperrsignal (RESETcommand) einen hohen Pegel hat, unmittelbar nachdem das erste Sperrsignal (S-inhib) auf den niedrigen Pegel wechselt, und wobei der Ausgangsanschluss (BS) mit dem Drain eines dritten Transistors (TR3) verbunden ist, dessen Gate in der Lage ist das zweite Sperrsignal (RESETcommand) zu empfangen.

8. System nach einem der vorhergehenden Ansprüche, wobei die zusätzlichen Stufen (ETA) des zusätzlichen Schieberegisters (SSR) mit den Stufen (ET) des Schieberegisters (SR) mit regelmäßigem Abstand zwischen den Stufen (ET) des Schieberegisters (SR) verbunden sind.

9. System nach einem der vorhergehenden Ansprüche, wobei jede zusätzliche Stufe (ETA) mit einer Stufe (ET) über einen diodenverbundenen Transistor (TRD) verbunden ist.

**Claims**

1. A fingerprint acquisition system, comprising a touch surface configured so as to provide location information (InfoLoc) for at least one contact point (PCO) of a finger having a fingerprint in contact with the touch surface, the system comprising:

   - a TFT panel, arranged underneath the touch surface, comprising a detection array comprising M rows at least some of which comprise detection cells (P(i,j)) for detecting an image representative of the fingerprint, a row-addressing system being integrated into the array, and configured so as to activate, row after row, the detection cells (P(i,j)) of a corresponding row in a scanning direction of the rows,
   - a calculation device (CALC), configured so as to receive the location information (InfoLoc), and so as to command the addressing system to address the array starting from an address range (ZA) grouping together a subset of rows from among the M rows of the array and including the rows arranged before and after the contact point (PCO) in the scanning direction of the rows of the array,

   characterized in that the addressing system comprises a shift register (SR) comprising M stages (ET), each of the M stages (ET) having an output connected to a corresponding row input, and an additional shift register (SSR), comprising N stages, called additional stages (ETA), where N < M, the additional shift register (SSR) being connected to the row inputs by way of the shift register (SR), each additional stage (ETA) being connected to the first stage (ET) of a group of stages (ET) of the shift register (SR) .

2. The system according to claim 1, wherein the calculation device (CALC) is configured so as to determine a row, called initial row (L_init), corresponding to the start of the address range (ZA), in the scanning direction of the rows, and so as to determine an additional stage, called initial additional stage (ETA_init), the initial additional stage (ETA_init) being able to activate the detection cells (P(i,j)) of the initial row (L_init).

3. The system according to claim 2, comprising a signal generator (GSI) configured so as to provide the shift register (SR) and the additional shift register (SSR) with a first clock signal (CK1) and a second clock signal (CK2) in phase opposition to one another.

4. The system according to claim 3, wherein each additional stage (ETA) comprises:

   - an input terminal (BE), configured so as to receive a high-level signal, called token,
   - a first transistor (TR1) whose gate is connected directly or indirectly to the input terminal (BE), and whose drain is configured so as to receive a clock signal from among the first clock signal (CK1) or the second clock signal (CK2),
   - an intermediate node (NI) connected to the source of the first transistor (TR1), the intermediate node (NI) being connected to the input terminal of the following additional stage,
   - an inhibition circuit (CIN) for the stage (ET) connected to the additional stage (ETA), controlled by a first inhibition signal (S-inhib) provided by the signal generator (GSI), the inhibition circuit (CIN) being configured such that the token is transmitted to the following additional stage at each clock pulse (CK1, CK2) for as long as the first inhibition signal (S-inhib) is at a low level, and that the token is transmitted to the stage (ET) connected to the additional stage (ETA) when the first inhibition signal is at a high level.

5. The system according to claim 4, wherein the signal generator (GSI) is configured such that the first inhibition signal (S-inhib) has a high level when the input terminal (BE) of the initial additional stage (ETA_init) determined by the calculation device (CALC) receives the token.

6. The system according to claim 4 or 5, wherein the inhibition circuit (CIN) comprises:

   - a second transistor (TR2) whose gate is connected directly or indirectly, to the intermediate node (NI) and whose drain is able to receive the inhibition signal (S-inhib),
   - an output terminal (BS) connected to the source of the second transistor (TR2), and to a stage (ET) of the shift register (SR).

7. The system according to claim 6, wherein the signal generator (GSI) is configured so as to provide the inhibition circuit (CIN) with a second inhibition signal (RESETcommand), the second inhibition signal (RESETcommand) having a high level immediately after the first inhibition signal (S-inhib) changes to the low level, and wherein the output terminal (BS) is connected to the drain of a third transistor (TR3) whose gate is able to receive the second inhibition signal (RESETcommand).

8. The system according to any one of the preceding claims, wherein the additional stages (ETA) of the additional shift register (SSR) are connected to the stages (ET) of the shift register (SR) with regular spacing between the stages (ET) of the shift register (SR).

9. The system according to any one of the preceding claims, wherein each additional stage (ETA) is connected to a stage (ET) by way of a diode-connected transistor (TRD).

FIG. 1

FIG. 2

FIG. 3

FIG. 4

EP 3 924 869 B1

FIG. 5

## RÉFÉRENCES CITÉES DANS LA DESCRIPTION

**Documents brevets cités dans la description**

- EP 0586398 B1
- FR 2975213
- US 2017336894 A1